(19) Europäisches Patentamt
European Patent Office
Office européen des brevets

(11) **EP 3 751 468 B1**

(12) **FASCICULE DE BREVET EUROPEEN**

(45) Date de publication et mention de la délivrance du brevet:
**28.01.2026 Bulletin 2026/05**

(21) Numéro de dépôt: **20179039.1**

(22) Date de dépôt: **09.06.2020**

(51) Classification Internationale des Brevets (IPC):
**G06N 3/098** (2023.01)    **G06N 3/063** (2023.01)
**G06N 3/045** (2023.01)    **H04L 9/00** (2022.01)
**G06N 3/084** (2023.01)

(52) Classification Coopérative des Brevets (CPC):
**G06N 3/063; G06N 3/045; G06N 3/084; G06N 3/09; G06N 3/098; H04L 9/008**

(54) **MÉTHODE D'APPRENTISSAGE COLLABORATIF D'UN RÉSEAU DE NEURONES ARTIFICIELS SANS DIVULGATION DES DONNÉES D'APPRENTISSAGE**

KOLLABORATIVE LERNMETHODE EINES KÜNSTLICHEN NEURONENNETZES OHNE WEITERVERBREITUNG DER LERNDATEN

METHOD FOR COLLABORATIVE LEARNING OF AN ARTIFICIAL NEURAL NETWORK WITHOUT REVEALING LEARNING DATA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2019 FR 1906241**

(43) Date de publication de la demande:
**16.12.2020 Bulletin 2020/51**

(73) Titulaire: **Commissariat à l'Energie Atomique et aux Energies Alternatives
75015 Paris (FR)**

(72) Inventeurs:
• **SIRDEY, Renaud**
**78720 Cernay-la-Ville (FR)**
• **CARPOV, Sergiu**
**91300 Massy (FR)**

(74) Mandataire: **Santarelli
Tour Trinity
1 bis Place de la Défense
92400 Courbevoie (FR)**

(56) Documents cités:
**CN-A- 109 684 855**    **FR-A1- 3 060 165**

• LIU CHANGCHANG ET AL: "Secure Model Fusion for Distributed Learning Using Partial Homomorphic Encryption", 25 April 2019, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 154 - 179, ISBN: 978-3-319-10403-4, XP047507043
• LE TRIEU PHONG ET AL: "Privacy-Preserving Deep Learning via Additively Homomorphic Encryption", vol. 20180104:045638, 1 August 2017 (2017-08-01), pages 1 - 18, XP061034574, Retrieved from the Internet <URL:http://eprint.iacr.org/2017/715.pdf> [retrieved on 20170801]
• CANTEAUT ANNE ET AL: "Stream Ciphers: A Practical Solution for Efficient Homomorphic-Ciphertext Compression", JOURNAL OF CRYPTOLOGY, SPRINGER US, NEW YORK, vol. 31, no. 3, 31 January 2018 (2018-01-31), pages 885 - 916, XP036515399, ISSN: 0933-2790, [retrieved on 20180131], DOI: 10.1007/S00145-017-9273-9

## Description

### Domaine technique

La présente invention concerne le domaine général de l'intelligence artificielle et plus particulièrement celui de l'apprentissage collaboratif d'un réseau de neurones artificiels. Elle concerne également le domaine du calcul à préservation de confidentialité.

### Etat de la technique antérieure

L'apprentissage d'un réseau de neurones artificiels est généralement effectué en entraînant un modèle sur les données d'un fournisseur de données. La plateforme informatique chargée de l'apprentissage est quelquefois confondue avec le fournisseur de données lui-même. Le plus souvent cependant, la plateforme accède aux données d'un fournisseur extérieur au moyen d'une architecture client/serveur, le serveur gérant la base de données d'apprentissage et le client se chargeant de l'apprentissage du modèle.

Plus récemment, il a été proposé une méthode d'apprentissage collaboratif permettant d'entrainer un réseau de neurones artificiels sur des données stockées de manière distribuée, par exemple par des données présentes dans des terminaux mobiles d'usagers. Dans un tel contexte collaboratif, plusieurs fournisseurs de données distincts disposent chacun d'un ensemble distinct de données d'apprentissage et acceptent de collaborer, via une plateforme d'agrégation, afin d'obtenir un modèle entrainé sur l'union de ces ensembles de données.

On trouvera une description d'une méthode d'apprentissage collaboratif, dénommée apprentissage fédéré ou fédératif (*federated learning*), dans l'article de H.B. McMahan et al. intitulé « Communication-efficient learning of deep networks from decentralized data » publié dans Proc. of the 20th International Conference on Artificial Intelligence and Statistics (AISTATS), vol. 54, 2017.

Ladite méthode d'apprentissage fédératif fait appel à une pluralité de fournisseurs de données ainsi qu'à une plateforme d'agrégation. Son fonctionnement peut se résumer comme suit :
La plateforme d'agrégation part d'un modèle initial commun à tous les fournisseurs de données. Ce modèle est mis à jour de manière itérative, le modèle de l'itération en cours est dénommé modèle courant. Le modèle courant est défini par ses paramètres, à savoir les poids synaptiques entre neurones de couches adjacentes du réseau.

A chaque itération, la plateforme d'agrégation sélectionne tout ou partie des fournisseurs de données et leur transmet les paramètres du modèle courant.

Chaque fournisseur de données ainsi sélectionné procède alors à un nombre prédéterminé d'itérations d'apprentissage, à partir du modèle courant, sur son propre ensemble de données. Le résultat de l'apprentissage est un modèle mis à jour localement.

Les paramètres mis à jour localement par chaque fournisseur sont ensuite transmis à la plateforme d'agrégation qui les combine pour produire une mise à jour du modèle courant.

Les paramètres du modèle courant sont alors transmis aux fournisseurs de données pour l'itération suivante Le processus se répète jusqu'à ce qu'un critère d'arrêt soit satisfait. La version finale du modèle, autrement dit les paramètres du modèle au terme de l'apprentissage, est transmise par la plateforme d'agrégation aux différents fournisseurs de données.

On comprend ainsi que chaque fournisseur de données contribue à l'élaboration d'un modèle global en l'entrainant sur son propre ensemble de données. Il est important de noter que les données des différents fournisseurs ne sont pas transmises à la plateforme, seuls les paramètres mis à jour le sont.

Une autre méthode d'apprentissage fédératif est divulguée par le document "Secure Model Fusion for Distributed Learning Using Partial Homomorphic Encryption" de Liu Changchang, Chakraborty Supriyo, et Verma Dinesh ; 2019, 10.1007/978-3-030-17277-0_9.

L'apprentissage fédératif possède des propriétés intéressantes. Tout d'abord, il garantit un certain niveau de confidentialité entre les fournisseurs de données puisqu'ils ne peuvent accéder aux ensembles de données d'apprentissage les uns des autres. Ensuite, le volume de données échangées entre la plateforme d'agrégation et les différents fournisseurs est relativement modeste au regard de la taille des ensembles de données d'apprentissage (il est plus économique de transmettre les paramètres du modèle que les données d'apprentissage elles-mêmes). Enfin, la majeure partie des calculs, à savoir celle induite par l'exécution de l'algorithme d'apprentissage, est déportée vers les fournisseurs de données, la plateforme se contentant d'une simple combinaison des modèles partiels.

Toutefois, cette méthode d'apprentissage fédératif présente aussi des inconvénients. Ainsi, le modèle courant, et en particulier la version finale du modèle, au terme du processus d'apprentissage, est connu tant de la plateforme que des différents fournisseurs de données. Or, dans certains cas, il est souhaitable de garantir que les paramètres du modèle restent confidentiels vis-à-vis de la plateforme elle-même. En outre la connaissance des paramètres des modèles partiels, entraînés localement, peut permettre à la plateforme, par des techniques d'inversion de modèle, de remonter aux données d'apprentissage.

Ainsi par exemple, si plusieurs sociétés de cybersécurité, disposant chacune d'une base de données de signatures d'attaques informatiques, décident de collaborer pour élaborer un modèle de classification par réseau de neurones plus efficace, elles ne souhaitent pas nécessairement partager des informations sur des attaques ayant eu lieu sur les réseaux de leur sociétés clientes, et encore moins divulguer à une plateforme d'agrégation le modèle final qui trahirait leur capacité de détection.

Un objet de la présente invention est par conséquent de proposer une méthode d'apprentissage fédératif d'un réseau de neurones artificiels qui ne présente pas les inconvénients précités.

## Présentation de l'invention

La présente invention est une méthode d'apprentissage fédératif d'un modèle de réseau de neurones artificiels telle que définie par la revendication 1. Dans cette méthode, le modèle est caractérisé par des paramètres donnant les coefficients synaptiques dudit réseau ; la méthode d'apprentissage met en œuvre une pluralité $N$ de fournisseurs de données ($DS_1,...,DS_N$) disposant chacun d'un ensemble de données d'apprentissage distinct ($S_1,.., S_N$) ainsi qu'une plateforme d'agrégation ($FP$) ; la méthode débute par une étape d'initialisation pour initialiser les paramètres du modèle, et se poursuit par une pluralité d'itérations successives, chaque itération mettant à jour les paramètres d'un modèle courant du réseau de neurones. Ladite méthode est spécifique en ce que :

- à l'étape d'initialisation, les fournisseurs de données partagent la clé privée et la clé publique d'un cryptosystème homomorphe ($HE.sk, HE.pk$) ; et qu'à chaque itération $t$,
- la plateforme d'agrégation sélectionne une sous-pluralité $M \leq N$ de fournisseurs de données et transmet aux $M$ fournisseurs de données ainsi sélectionnés, les paramètres du modèle courant, chiffrés en homomorphe, $Enc(w^t, HE.pk)$;
- chaque fournisseur de données sélectionné déchiffre les paramètres ainsi chiffrés au moyen de la clé privée du cryptosystème homomorphe, entraine le modèle courant sur son ensemble de données d'apprentissage pour obtenir un modèle partiel, chiffre les paramètres du modèle partiel ainsi obtenu et les transmet sous forme chiffrée à la plateforme d'agrégation ;
- la plateforme d'agrégation effectue, dans le domaine homomorphe, une combinaison des paramètres des modèles partiels obtenus par les différents fournisseurs de données, pour obtenir les paramètres d'un nouveau modèle courant, chiffrés dans le domaine homomorphe ;

et, lorsqu'un critère d'arrêt est satisfait, chaque fournisseur de données déchiffre, au moyen de la clé privée du cryptosystème homomorphe, les paramètres du dernier modèle courant pour obtenir un modèle final, entrainé sur la réunion desdits ensembles de données d'apprentissage.

Selon un mode de réalisation non revendiqué, présenté pour permettre la compréhension de l'invention, à chaque itération $t$, chaque fournisseur de données sélectionné chiffre les paramètres du modèle partiel au moyen de la clé publique du cryptosystème homomorphe et transmet les paramètres du modèle partiel ainsi chiffrés,

$$Enc\left(w_n^t, HE.pk\right)_,$$ à la plateforme d'agrégation.

Typiquement, la plateforme d'agrégation effectue un moyennage, dans le domaine homomorphe, des paramètres respectifs des modèles partiels obtenus par les différents fournisseurs sélectionnés.

Dans la méthode selon la présente invention, à l'étape d'initialisation, chaque fournisseur de données génère également une clé secrète de chiffrement par flot, $K_{sym_,}^n$, et transmet à la plateforme d'agrégation ladite clé secrète, chiffrée au moyen de la clé publique du cryptosystème homomorphe, $Enc\left(K_{sym}^n, HE.pk\right)_.$

Dans ce cas, à chaque itération $t$, chaque fournisseur de données sélectionné, $DS_n$, chiffre les paramètres du modèle partiel au moyen de sa clé secrète, $K_{sym_,}^n$, et transmet les paramètres du modèle partiel ainsi chiffrés, $Enc\left(w_n^t, K_{sym}^n\right)_,$ à la plateforme d'agrégation.

A chaque itération $t$, la plateforme d'agrégation effectue alors un transchiffrement des paramètres des modèles partiels des différents fournisseurs de données sélectionnés, pour obtenir ces mêmes paramètres chiffrés dans le domaine homomorphe.

Avantageusement, dans certains modes de réalisation, les clés secrètes des différents fournisseurs de données sont choisies identiques, la clé secrète commune ayant été partagée entre les différents fournisseurs de données au moyen d'un protocole d'échange de clés multipartite.

De plus, la plateforme effectue, dans le domaine homomorphe, ladite combinaison des paramètres des modèles partiels obtenus par les différents fournisseurs de données en effectuant un moyennage en parallèle des différents paramètres des modèles partiels, au moyen d'un traitement par lots sur un chiffré homomorphe représentant un composite des différents paramètres des modèles partiels.

## Brève description des figures

D'autres caractéristiques et avantages de l'invention apparaîtront à la lecture d'un mode de réalisation préférentiel de l'invention, décrit en référence aux figures jointes parmi lesquelles :

[Fig. 1] représente de manière schématique les échanges entre une plateforme d'agrégation et des fournisseurs de données d'apprentissage dans une méthode d'apprentissage fédératif d'un réseau de neurones artificiels, présentée pour faciliter la compréhension de l'invention ;
[Fig. 2] représente de manière schématique les échanges entre une plateforme d'agrégation et des fournisseurs de données d'apprentissage dans une méthode d'apprentissage fédératif d'un réseau de neurones artificiels, selon un mode de réalisation de l'invention ;
[Fig. 3] représente un ordinogramme d'une méthode d'apprentissage fédératif d'un réseau de neurones artificiels, telle que celle illustrée par la Fig.1 ;
[Fig. 4] représente un ordinogramme d'une méthode d'apprentissage fédératif d'un réseau de neurones artificiels, telle que celle illustrée par la Fig.2.

## Description des modes de réalisation

On considérera dans la suite une pluralité de fournisseurs de données disposant chacun d'un ensemble de données d'apprentissage, ces fournisseurs de données souhaitant fédérer ces ensembles de données pour entraîner un réseau de neurones artificiels tout en préservant la confidentialité de ces données les uns par rapport aux autres. L'apprentissage général du réseau de neurones est dévolu à une plateforme informatique distincte des différents fournisseurs de données, dénommée dans la suite plateforme d'agrégation.

L'apprentissage du réseau de neurones pourra être du type supervisé ou non supervisé. Dans le premier cas, on comprendra que les données d'apprentissage comprennent des exemples étiquetés, c'est-à-dire des valeurs de variables prédictives (ou données d'entrée du réseau) pour lesquelles les valeurs correspondantes des variables cibles sont connues. Dans le second cas, le réseau de neurones ne présuppose aucun étiquetage des données d'apprentissage, celui-ci se contentant de regrouper les exemples par catégories (clustering).

Le réseau de neurones artificiels est entrainé par la plateforme informatique pour effectuer une tâche prédéterminée. Cette tâche peut être une classification, une prédiction, ou une simple réduction de dimension de l'espace de données d'entrée (réseau de neurones fonctionnant comme autoencodeur). La réduction de dimension peut en outre être elle-même préalable à une autre tâche par exemple une classification par un second réseau de neurones en cascade avec le précédent.

La plateforme d'agrégation part d'un modèle initial du réseau de neurones. Ce modèle est défini par ses paramètres, c'est-à-dire, plus précisément, par les coefficients synaptiques entre neurones de couches adjacentes, ainsi que sa fonction d'activation.

Le modèle initial est partagé entre toutes les parties, autrement dit il est commun aux fournisseurs de données et à la plateforme d'agrégation. Par exemple, il peut résulter d'une convention initiale, telle qu'un modèle grossier déjà divulgué, ou bien d'un tirage aléatoire des différents paramètres en question. Dans ce dernier cas, les paramètres du modèle initial sont communiqués par la plateforme d'agrégation aux différents fournisseurs de données.

Ce modèle initial fait ensuite l'objet d'une mise à jour itérative faisant intervenir les différents fournisseurs de données et la plateforme d'agrégation. Le modèle mis à jour au cours d'une itération est dénommé modèle courant.

A chaque itération, les opérations suivantes sont effectuées :
La plateforme d'agrégation sélectionne d'abord tout ou partie des fournisseurs de données pour des mises à jour partielles. Cette sélection pourra notamment résulter d'un tirage aléatoire d'un nombre prédéterminé de fournisseurs de données à chaque itération. Cette option pourra être préférée lorsque le nombre de fournisseurs de données est particulièrement élevé et/ou que leurs ressources calculatoires sont limitées, par exemple si ceux-ci sont des terminaux mobiles ou des nœuds d'un système IoT. En revanche, lorsque les fournisseurs de données sont des serveurs, on pourra préférer les mettre tous à contribution.

La plateforme d'agrégation transmet ensuite les paramètres du modèle courant, chiffrés au moyen d'un chiffrement homomorphe, aux fournisseurs de données ainsi sélectionnés. Par exemple, les paramètres du modèle courant pourront être chiffrés au moyen de la clé publique, *HE.pk,* d'un cryptosystème homomorphe (*HE.pk,HE.sk*). On supposera que les fournisseurs de données possèdent tous la clé privée correspondante, *HE.sk.* On comprendra que le terme clé privée signifie ici que la clé appartient au groupe des fournisseurs de données. Par exemple, cette clé privée aura pu être partagée entre les fournisseurs de données au moyen d'un protocole d'échange de clés Diffie-Hellman multipartite.

Chaque fournisseur de données sélectionné déchiffre les paramètres du modèle courant au moyen de la clé privée partagée, *HE.sk.* Il peut ainsi construire le modèle courant en clair. Il entraine ensuite le réseau de neurones ainsi obtenu sur son propre ensemble de données d'apprentissage en effectuant un (faible) nombre prédéterminé d'itérations locales. A chaque itération locale, les paramètres du modèle sont mis à jour à l'aide d'un algorithme d'apprentissage tel que l'algorithme de descente de gradient stochastique, connu en soi. Au terme de cette phase d'apprentissage, chaque fournisseur de données, dispose d'un modèle partiellement mis à jour, dénommé ci-après modèle partiel, au sens où il n'a été entrainé que sur son propre corpus de données d'apprentissage.

Chaque fournisseur de données ayant effectué cette mise à jour chiffre alors en homomorphe les paramètres du modèle partiel qu'il a obtenu, au moyen de la clé publique *HE.pk* et les transmet à la plateforme d'agrégation.

Selon une variante, chaque fournisseur de données chiffre les paramètres de son modèle partiel à l'aide d'une clé secrète, par exemple une clé symétrique d'un chiffrement par flot, au lieu de les chiffrer en homomorphe. Les fournisseurs de données transmettent alors à la plateforme les paramètres chiffrés par leurs clés secrètes respectives. Les fournisseurs de données auront dans ce cas transmis à la plateforme d'agrégation, pendant la phase d'initialisation, leurs clés secrètes respectives chiffrées en homomorphe. Avantageusement encore, une seule clé secrète sera choisie pour l'ensemble des fournisseurs de données, celle-ci ayant pu être partagée par un protocole d'échange de clés Diffie-Hellman multipartite. La plateforme peut alors effectuer un transchiffrement des paramètres chiffrés par chiffrement symétrique pour obtenir ces mêmes paramètres chiffrés en homomorphe. Cette variante présente l'avantage d'être bien moins consommatrice en bande passante (sur la voie montante) que la précédente dans la mesure où un chiffrement symétrique conduit à des données chiffrées de même taille que les données en clair.

Quelle que soit la variante utilisée pour le chiffrement des paramètres, la plateforme d'agrégation effectue une combinaison, au moyen d'un opérateur de combinaison évalué dans le domaine homomorphe, des différents modèles partiels pour obtenir un modèle agrégé, équivalent de celui qui aurait été entraîné sur la réunion des ensembles de données des fournisseurs sélectionnés. Différents opérateurs de combinaison peuvent être envisagés comme décrit plus loin.

Du fait de la combinaison dans le domaine homomorphe, les paramètres du modèle agrégé sont obtenus par la plateforme sous forme chiffrée. Ainsi, la plateforme d'agrégation n'a accès ni aux modèles partiels ni au modèle agrégé résultant de l'opération de combinaison.

La plateforme d'agrégation peut alors lancer l'itération suivante en effectuant une nouvelle sélection de fournisseur de données et en leur transmettant les paramètres du modèle agrégé, celui-ci constituant le modèle courant de la nouvelle itération.

Le processus de mise à jour se poursuit jusqu'à ce qu'un critère d'arrêt soit satisfait, par exemple après un nombre prédéterminé d'itérations ou bien après un nombre prédéterminé d'itérations locales.

Au terme du processus, la plateforme d'agrégation peut transmettre les paramètres du modèle final, chiffrés dans le domaine homomorphe, à l'ensemble des fournisseurs de données. Ceux-ci les déchiffrent alors à l'aide de la clé privée partagée *HE.sk* pour obtenir le modèle final en clair.

Alternativement, la plateforme peut s'abstenir d'effectuer cette transmission, en particulier si la plateforme sélectionne tous les fournisseurs de données à chaque itération, chaque fournisseur de données disposant alors du modèle agrégé reçu à la dernière itération et pouvant le déchiffrer pour obtenir un modèle final en clair.

Dans tous les cas, les fournisseurs de données disposent, au terme du processus d'apprentissage d'un réseau de neurones ayant été entraîné sur l'union des ensembles de données, sans divulgation de ces dernières entre fournisseurs ni à la plateforme d'agrégation. En outre, la plateforme n'a accès ni aux modèles intermédiaires ni au modèle final : seuls les fournisseurs de données et, plus généralement les destinataires du modèle final disposant de la clé privée *HE.sk,* peuvent y accéder.

On notera que, dans le processus d'apprentissage fédératif décrit précédemment, les données d'apprentissage ne sont jamais chiffrées et/ou transmises en homomorphe à la plateforme, seuls les paramètres du modèle courant le sont. Or, les paramètres représentent une quantité de données bien plus faible que celles des données d'apprentissage, *a fortiori* après chiffrement dans le domaine homomorphe. Ainsi, le processus d'apprentissage ne nécessite pas des débits de transmission très élevés.

On notera enfin que la partie consommatrice en temps de calcul, à savoir la mise à jour des modèles partiels, est effectuée dans le domaine des clairs par les fournisseurs de données. Ces calculs sont donc relativement simples et effectués en parallèle, ce qui conduit à des cycles d'itération courts. Seule l'opération de combinaison, qui est l'opération la plus simple, est effectuée dans le domaine homomorphe. Qui plus est, cette opération peut aussi être effectuée en parallèle comme nous le verrons plus loin.

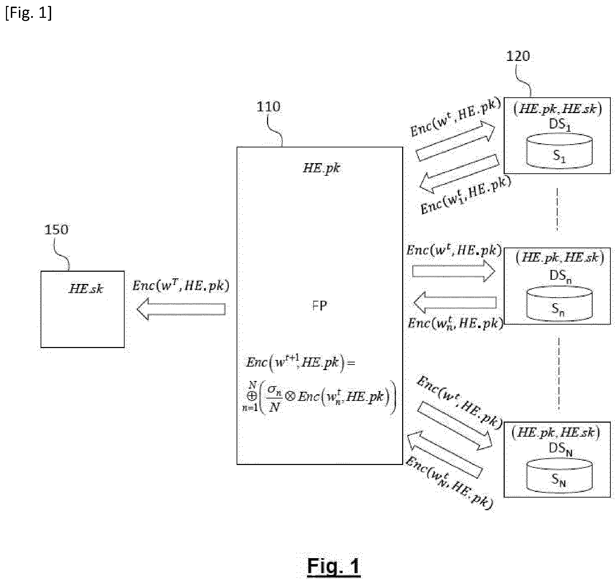

La Fig. 1 représente de manière schématique les échanges entre la plateforme d'agrégation et les fournisseurs de données d'apprentissage dans une méthode d'apprentissage fédératif.

On a représenté en 110 la plateforme d'agrégation, *FP,* et en 120 les *N* fournisseurs de données, $DS_1,...,DS_N$. La plateforme d'agrégation est typiquement hébergée sur un serveur de calcul dans le Cloud. Les fournisseurs de données peuvent également être des serveurs, des terminaux d'utilisateurs, voire des smartphones ou des ordinateurs individuels, ou bien, dans une moindre mesure, des nœuds d'un système IoT.

Les fournisseurs de données, 120, disposent des ensembles de données d'apprentissage respectifs, $S_1, ...,S_N$ et disposent, au terme de l'apprentissage fédératif, des paramètres en clair du réseau de neurones artificiels, entrainé sur

l'ensemble $S = \bigcup_{n=1}^{N} S_n$ .

Optionnellement, un destinataire additionnel du modèle entraîné, 150, distinct des fournisseurs de données, pourra recevoir également les paramètres du réseau de neurones artificiels en clair, bien que n'ayant pas participé à l'apprentissage fédératif. Ce destinataire peut d'ailleurs être le commanditaire de cet apprentissage.

Les fournisseurs de données, 120, ainsi que, le cas échéant, le destinataire additionnel, 150, partagent un clé privée commune *HE.sk* d'un cryptosystème homomorphe (*HE.pk,HE.sk*). La manière dont la clé privée est partagée entre ces entités ne fait pas partie de la présente invention. Toutefois, comme indiqué plus haut, on pourra recourir à un protocole d'échange de clé de Diffie-Hellman multipartite pour partager cette clé de manière confidentielle vis-à-vis des tiers. Bien entendu, les fournisseurs de données et, le cas échéant, le destinataire additionnel, disposent de la clé publique correspondante. Enfin, la plateforme d'agrégation dispose de la clé publique *HE.pk* mais non de la clé privée *HE.sk.*

Les échanges entre les différentes entités lors d'une itération ont été également représentés sur la figure.

Si l'on note de manière synthétique $w^t$ les paramètres du modèle, c'est-à-dire les coefficients synaptiques du réseau de neurones artificiels au terme de l'itération *t*, la plateforme d'agrégation dispose de ces paramètres chiffrés dans le domaine homomorphe, soit $Enc(w^t, HE.pk)$

La plateforme *FP* sélectionne un ensemble $\Omega^t$ de *M* fournisseurs de données parmi *N,* avec $M \leq N,$ et transmet à chacun d'eux les paramètres chiffrés $Enc(w^t, HE.pk)$

Chaque fournisseur de données $DS_n$ de $\Omega^t$ déchiffre les paramètres chiffrés en question à l'aide de la clé privée, *HE.pk,* entraine, sur quelques itérations, le modèle sur son propre ensemble de données d'apprentissage $S_n$ et en déduit les paramètres du modèle partiel $w_n^t$, par exemple au moyen de l'algorithme du gradient stochastique de manière connue en soi. Chaque fournisseur de données $DS_n$ de $\Omega^t$ renvoie ensuite à la plateforme *FP,* les paramètres de son modèle partiel après les avoir chiffrés en homomorphe, soit $Enc\left(w_n^t, HE.pk\right)$.

La plateforme d'agrégation *FP* effectue alors la combinaison, dans le domaine homomorphe, des modèles partiels ainsi entraînés par les fournisseurs de $\Omega^t$.

Selon une variante, la combinaison la combinaison peut porter sur tous les modèles partiels y compris ceux des fournisseurs non sélectionnés, c'est-à-dire appartenant à $\Omega-\Omega^t$. Autrement dit, pour les fournisseurs de données non sélectionnés, $Enc\left(w_n^t, HE.pk\right) = Enc\left(w_n^{t-1}, HE.pk\right)$.

En tout état de cause, l'agrégation des modèles partiels peut être réalisée, par exemple, à l'aide d'une simple moyenne :
[Math. 1]

$$Enc\left(w^{t+1}, HE.pk\right) = \bigoplus_{n=1}^{N}\left(\frac{\sigma_n}{N} \otimes Enc\left(w_n^t, HE.pk\right)\right) \tag{1}$$

où $\oplus$ et $\otimes$ sont respectivement les opérations d'addition et de multiplication externe dans le domaine homomorphe, et où $\sigma_n = Card(S_n)$, et où l'on a supposé ici pour des raisons de simplification de la présentation que les *N* fournisseurs de données étaient sélectionnés.

On rappelle qu'un chiffrement homomorphe additif vérifie les propriétés suivantes :
[Math. 2]

$$Enc\left(a + b, HE.pk\right) = Enc\left(a, HE.pk\right) \oplus Enc\left(b, HE.pk\right) \tag{2-1}$$

[Math. 3]

$$Enc\left(k.a, HE.pk\right) = k \otimes Enc\left(a, HE.pk\right) \qquad (2\text{-}2)$$

L'opérateur $\otimes$ permet de réaliser une multiplication d'un chiffré par un clair, le résultat étant chiffré. Dans le cas présent, il permet de réaliser les multiplications par les termes $\dfrac{\sigma_n}{N}$. Pour éviter d'effectuer des opérations en calcul flottant (non réalisables dans le domaine homomorphe), on multipliera en pratique les termes $\dfrac{\sigma_n}{N}$ par une constante de valeur élevée avant la multiplication.

La pondération par $\sigma_n$ au sein de l'expression (1) permet de conférer plus d'importance aux fournisseurs de données possédant des ensembles de données d'apprentissage de grande taille. Cette pondération suppose que les tailles $\sigma_n$ des différents ensembles de données d'apprentissage soient connues de la plateforme. Elles peuvent par exemple lui avoir été communiquées par les fournisseurs de données dans la phase d'initialisation.

On peut déduire de l'expression (1) et des expressions (2-1) et (2-2) :

[Math. 4]

$$Enc\left(w^{t+1}, HE.pk\right) = Enc\left(\sum_{n=1}^{N} \frac{\sigma_n}{N}.w_n^t, HE.pk\right) \qquad (3)$$

Il convient de noter que des opérations de combinaison plus complexes que celle de (1) pourront être envisagées sans sortir du cadre de la présente invention. Dans ce cas, on pourra avoir recours à des cryptosystèmes homomorphes FHE (*Full Homomorphic Encryption*) ou SHE (*Somewhat Homomorphic Encryption*).

Une fois la combinaison effectuée, la plateforme d'agrégation dispose des paramètres chiffrés dans le domaine homomorphe, soit $Enc(w^{t+1}, HE.pk)$ et peut procéder à une nouvelle sélection de fournisseur de données, $\Omega^{t+1}$.

Au terme des itérations d'apprentissage, la plateforme *FP* peut transmettre les paramètres chiffrés $Enc(w^T, HE.pk)$, où *T* est le nombre total d'itérations, à l'ensemble des fournisseurs de données et au destinataire supplémentaire, 150. Ceux-ci peuvent récupérer les paramètres du modèle en clair à l'aide de la clé privée, *HE.sk.*

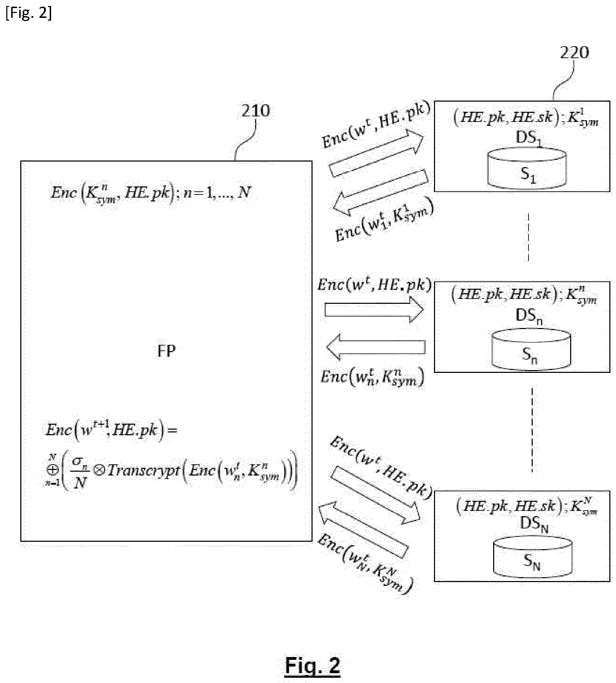

La Fig. 2 représente de manière schématique les échanges entre une plateforme d'agrégation et des fournisseurs de données d'apprentissage dans une méthode d'apprentissage fédératif d'un réseau de neurones artificiels, selon un mode de réalisation de l'invention.

On a représenté en 210 la plateforme d'agrégation, *FP*, et en 220 les *N* fournisseurs de données, $DS_1,...,DS_N$.

Les échanges diffèrent du mode de réalisation précédent au sens où les paramètres transmis par chaque fournisseur de données, $DS_n$, ne sont pas chiffrés dans le domaine homomorphe mais par n chiffrement par flot, au moyen d'une clé secrète, $K_{sym}^n$, soit $Enc\left(w_n^t, K_{sym}^n\right)$. Les paramètres ainsi chiffrés font l'objet d'un transchiffrement par la plateforme d'agrégation au moyen de la clé secrète chiffrée dans le domaine homomorphe, $Enc\left(K_{sym}^n, HE.pk\right)$ pour fournir ces mêmes paramètres chiffrés en homomorphe. Par exemple, la plateforme effectue un second chiffrement dans le domaine homomorphe des paramètres chiffrés par la clé secrète, et déchiffre ensuite, dans le domaine homomorphe, au moyen de la clé $Enc\left(K_{sym}^n, HE.pk\right)$, les paramètres doublement chiffrés. Le résultat du transchiffrement n'est autre que $Enc\left(w_n^t, HE.pk\right)$. On pourra trouver une description détaillée de cette étape de transchiffrement dans la demande FR-A-3060165 déposée au nom de la présente Demanderesse.

La combinaison des modèles partiels dans le domaine homomorphe est identique à celle réalisée par la plateforme dans le premier mode de réalisation. Le résultat, $Enc(W^{t+1}, HE.pk)$, est ensuite transmis aux fournisseurs de données sélectionnés.

Les clés chiffrées $Enc\left(K_{sym}^n, HE.pk\right)$, $n = 1,...,N,$ sont stockées sur la plateforme d'agrégation. Avantageusement, ces clés chiffrées étant relativement volumineuses, on choisira une seule clé secrète pour l'ensemble de fournisseurs de données, c'est-à-dire $K_{sym}^n = K_{sym}$, $n = 1,...,N,$ ce qui permet de n'avoir qu'une seule clé chiffrée, *Enc*

$(K_{sym}, HE.pk)$, à stocker sur la plateforme.

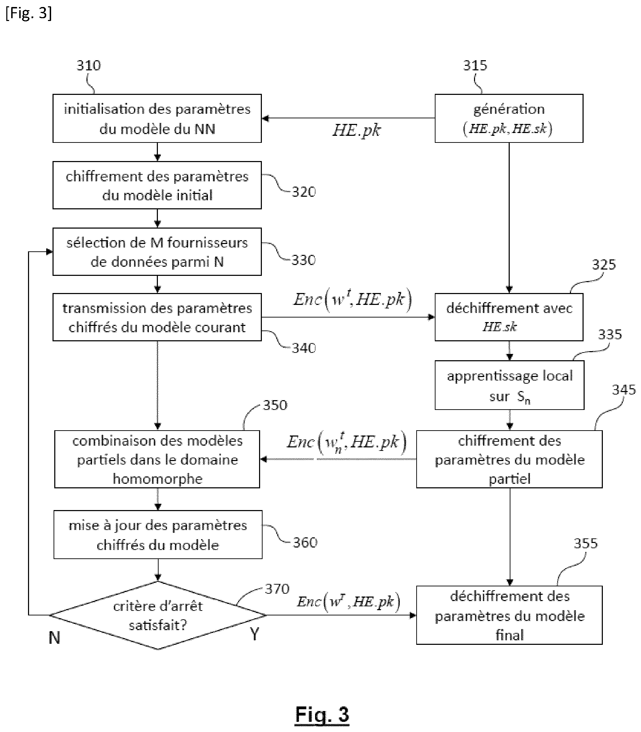

La Fig. 3 représente un ordinogramme d'une méthode d'apprentissage fédératif d'un réseau de neurones artificiels, selon le mode de réalisation présenté par la Fig. 1.

La partie gauche de la figure correspond à la séquence d'étapes exécutées par la plateforme d'agrégation alors que la partie droite correspond à la séquence d'étapes exécutées par les fournisseurs de données.

Les étapes 310 et 315 correspondent respectivement à une initialisation de la plateforme et des fournisseurs de données.

En 310, les paramètres du modèle du réseau de neurones artificiels sont initialisés par tirage aléatoire ou à partir d'un modèle grossier. On note $w^0$ les paramètres initiaux du modèle. En 315, les fournisseurs de données construisent ou échangent une clé privée commune, *HE.sk* d'un cryptosystème asymétrique homomorphe $(HE.pk, HE.sk)$. La clé publique correspondante, *HE.pk,* est transmise à la plateforme d'agrégation.

En 320, la plateforme chiffre en homomorphe les paramètres du modèle au moyen de la clé publique *HE.pk,* soit $Enc(w^0, HE.pk)$.

On entre ensuite dans une boucle itérative, l'itération courante étant notée par l'indice *t* et les paramètres du modèle courant étant notés synthétiquement $w^t$.

En 330, la plateforme d'agrégation sélectionne, de manière aléatoire ou non, un groupe $\Omega^t$ de *M* fournisseurs de données parmi *N*.

En 340, la plateforme transmet les paramètres du modèle courant, chiffrés dans le domaine homomorphe, soit $Enc(W^t, HE.pk)$.

En 325, chaque fournisseur de données du groupe $\Omega^t$ déchiffre lesdits paramètres à l'aide de la clé *HE.sk* afin d'obtenir les paramètres en clair.

En 335, chaque fournisseur de données, $DS_n$, du groupe $\Omega^t$ effectue une mise à jour des paramètres du modèle en l'entrainant sur son propre ensemble de données d'apprentissage, $S_n$. Cette mise à jour peut être par exemple effectuée au moyen de l'algorithme de descente de gradient stochastique ou SGD (*Stochastic Gradient Descent)*. A cette fin, l'ensemble d'apprentissage $S_n$ peut être divisé en mini-lots et les paramètres du modèle sont mis à jour successivement sur les différents mini-lots par :

[Math. 5]

$$w_n^t \leftarrow w_n^t - \eta \nabla Q_b\left(w_n^t\right) \qquad (4)$$

où $Q_b$ est la fonction objectif sur le lot et $\eta$ est le taux d'apprentissage.

Au terme de cette phase de mise à jour, à l'étape 345, le fournisseur de données $DS_n$ dispose des paramètres d'un modèle partiel. Il chiffre les paramètres du modèle partiel en homomorphe, soit $Enc\left(w_n^t, HE.pk\right)$ et les transmet à la plateforme d'agrégation.

En 350, la plateforme combine dans le domaine homomorphe les paramètres des modèles partiels des différents fournisseurs de données. Comme indiqué précédemment, cette combinaison peut porter sur les seuls modèles partiels des fournisseurs de données sélectionnés à l'étape 330 ou bien sur les modèles partiels de tous les fournisseurs de données. Différents opérateurs de combinaison peuvent être envisagés, telle qu'une simple moyenne, comme indiqué par l'expression (1).

Le résultat de la combinaison donne, en 360, les paramètres du modèle, chiffrés dans le domaine homomorphe, pour la nouvelle itération, soit $Enc(w^{t+1}, HE.pk)$.

On teste ensuite en 370 si un critère d'arrêt est satisfait, par exemple si un nombre prédéterminé d'itérations *T* est atteint. Dans la négative, on retourne à l'étape de sélection 330. En revanche, dans l'affirmative, la plateforme d'agrégation diffuse les paramètres du modèle obtenu au terme de la dernière itération, soit $Enc(w^T, HE.pk)$, à l'ensemble des fournisseurs de données (et le cas échéant à des destinataires additionnels comme vu en relation avec la Fig. 1). Ces derniers déchiffrent en 355 les paramètres du modèle, à l'aide de la clé privée commune *HE.sk,* pour obtenir les paramètres du modèle en clair, $w^T$.

Les fournisseurs de données et, le cas échéant, le(s) destinataire(s) additionnel(s) disposent alors d'un réseau de neurones artificiels ayant été entraîné de manière fédérative sur la réunion des ensembles d'apprentissage des fournisseurs de données.

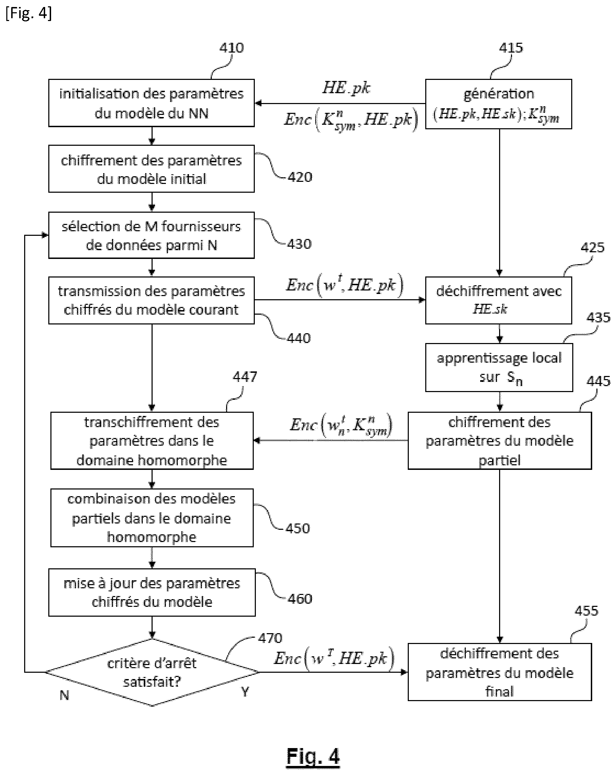

La Fig. 4 représente un ordinogramme d'une méthode d'apprentissage fédératif d'un réseau de neurones artificiels, selon le mode de réalisation de l'invention présenté par la Fig. 2.

Les étapes 410-470 sont respectivement identiques ou similaires aux étapes 310-370 de la Fig. 3. Seules les différences sont explicitées ci-après.

A l'étape 415, il est généré outre un cryptosystème homomorphe commun à l'ensemble des fournisseurs de données, une clé secrète, avantageusement une clé symétrique $K_{sym}^n$ d'un chiffrement par flot. On rappelle que, selon une variante, cette clé secrète est commune aux fournisseurs de données ou à certains d'entre eux seulement. La clé secrète $K_{sym}^n$, chiffrée en homomorphe, soit $Enc\left(K_{sym}^n, HE.pk\right)$ est transmise à la plateforme d'agrégation avec la clé publique homomorphe *HE.pk.*

A l'étape 445, le fournisseur de données $DS_n$ dispose des paramètres d'un modèle partiel. Au lieu de chiffrer les paramètres du modèle partiel en homomorphe comme dans le premier mode de réalisation, le fournisseur de données les chiffre au moyen du chiffrement symétrique, $Enc\left(w_n^t, K_{sym}^n\right)$ et les transmet à la plateforme.

A l'étape 447, la plateforme effectue un transchiffrement des paramètres des modèles partiels des fournisseurs de données sélectionnés. Autrement dit, ces paramètres chiffrés sont chiffrés une seconde fois en homomorphe et déchiffrés dans le domaine homomorphe au moyen de la clé chiffrée $Enc\left(K_{sym}^n, HE.pk\right)$. Plus simplement, l'opération de transchiffrement a ici pour objet de faire passer les paramètres d'un état où ils sont chiffrés par chiffrement symétrique à un état où ils sont chiffrés en homomorphe, sans passer par un état intermédiaire où ils seraient dévoilés en clair. Une fois transchiffrés en homomorphe, les modèles partiels sont combinés en 450 de la même manière qu'à l'étape 350.

Les paramètres des modèles partiels non sélectionnés lors de l'itération courante peuvent être obtenus sous forme chiffrée dans le domaine homomorphe, soit qu'ils aient déjà été transchiffrés à une itération précédente, soit qu'ils aient été chiffrés en homomorphe au moyen de la clé publique *HE.pk,* à l'étape 440, lors de la première itération.

Au terme du processus d'apprentissage fédératif, la plateforme transmet aux différents fournisseurs de données et, le cas échéant, au(x) destinataire(s) additionnel(s) disposant de la clé privée *HE.sk,* les paramètres du modèle sous forme chiffrée en homomorphe.

Quel que soit le mode de réalisation, la plateforme d'agrégation pourra utiliser un chiffrement SHE ou FHE permettant d'effectuer des opérations par lots (*batching*). On trouvera par exemple une description d'une telle méthode de chiffrement dans l'article de J-S. Coron et al. intitulé « Batch fully homomorphic encryption of the integers » publié dans Advances in Cryptology - EUROCRYPT 2013, Lecture Notes in Computer Science, vol 7881. Springer, Berlin, Heidelberg.

Le principe d'un traitement par lots est de multiplexer plusieurs clairs pour former un clair composite afin d'obtenir un seul chiffré. Ainsi, au lieu de chiffrer les clairs indépendamment les uns des autres, on chiffre un composite en clair construit à partir des clairs en question.

Le traitement par lots permet de paralléliser une même opération sur une pluralité de chiffrés dans le domaine homomorphe. Plus précisément, si l'on note $\alpha_1,...,\alpha_L$ une pluralité de premiers clairs et $(\alpha_1,...,\alpha_L)$ un premier composite en clair construit par batching à partir de ces premiers clairs et si l'on note $\beta_1,...,\beta_L$ une même pluralité de seconds clairs et $(\beta_1,...,\beta_L)$ un second composite en clair construit par batching à partir de ces seconds clairs, et si l'on chiffre les premier et second composites en question :

[Math. 6]

$$Enc\left(\alpha_1,...,\alpha_L; HE.pk\right) = \overline{\alpha} \qquad (5\text{-}1)$$

[Math. 7]

$$Enc\left(\beta_1,...,\beta_L; HE.pk\right) = \overline{\beta} \qquad (5\text{-}2)$$

on peut alors effectuer une opération d'addition ou de multiplication en parallèle sur les chiffrés dans le domaine homomorphe en calculant à partir de $\overline{\alpha}$ et $\overline{\beta}$ des chiffrés $c_{\overline{\alpha}\oplus\overline{\beta}}$ et $c_{\overline{\alpha}\odot\overline{\beta}}$ tels que :

[Math. 8]

$$Dec\left(c_{\overline{\alpha}\oplus\overline{\beta}}, HE.sk\right) = \left(\alpha_1 + \beta_1,.., \alpha_L + \beta_L\right) \qquad (6\text{-}1)$$

[Math. 9]

$$Dec\left(c_{\overline{\alpha}\odot\overline{\beta}}, HE.sk\right) = \left(\alpha_1 \times \beta_1,.., \alpha_L \times \beta_L\right) \qquad (6\text{-}2)$$

De la même façon, on peut effectuer en parallèle une multiplication de chiffrés par des constantes en clair ($k_1, ..., k_L$), en calculant, à partir d'un composite chiffré $\overline{\alpha}$, un chiffré $c_{k\overline{\alpha}}$, tel que :

[Math. 10]

$$Dec\left(c_{k\overline{\alpha}}, HE.sk\right) = \left(k_1\alpha_1, ..., k_L\alpha_L\right) \tag{7}$$

Les propriétés précitées de traitement par lots permettent de calculer en un faible nombre d'opérations, notamment quand la combinaison des modèles partiels est effectuée par moyennage (cf. expression (1)).

En effet, on rappelle que $w_n^t$ représente de manière synthétique les différents paramètres d'un modèle partiel, autrement dit $w_n^t$ est un vecteur dont les composantes $w_n^t(1), ..., w_n^t(L)$ sont les $L$ coefficients synaptiques du réseau de neurones artificiels entrainé sur l'ensemble $S_n$, à l'itération $t$.

Le fournisseur de données $PS_n$ peut chiffrer un clair composite dont les éléments constitutifs sont les composantes de $w_n^t$ pour obtenir le composite chiffré :

[Math. 11]

$$\overline{w}_n^t = Enc\left(w_n^t(1), ..., w_n^t(L), HE.pk\right) \tag{8}$$

La plateforme peut alors utiliser les propriétés (6-1) et (7) pour calculer :

[Math. 12]

$$\overline{w}^{t+1} = \overset{N}{\underset{n=1}{\oplus}} \left(\frac{\sigma_n}{N} \otimes \overline{w}_n^t\right) \tag{9}$$

dans laquelle l'expression entre parenthèses est obtenue en effectuant une seule opération en homomorphe sur le composite au lieu de $L$ opérations en parallèle sur les paramètres du modèle.

La parallélisation des calculs sur les différents paramètres est particulièrement pertinente pour des modèles de grande taille (valeur de $L$ élevée), la complexité des calculs étant alors proportionnelle au nombre $N$ d'utilisateurs (fournisseurs de données) et indépendant de la taille du modèle. Il est clair cependant que, pour des raisons pratiques, on pourra être amené à utiliser plusieurs composites en parallèle pour traiter des modèles de très grande taille (nombre de *slots* limité dans un *batch*).

*A contrario,* lorsque le nombre $N$ d'utilisateurs (fournisseurs de données) est très grand devant la taille du modèle, on préférera appliquer le *batching* sur les différents utilisateurs. Autrement dit, on crée alors $L$ composites, les $N$ éléments constitutifs de chaque composite étant les paramètres de même indice des différents modèles partiels. Plus précisément le composite associé au paramètre $\ell$ est donné par $w_1^t(\ell), ..., w_N^t(\ell)$. On note $\overline{w}^t(\ell)$ le chiffré correspondant.

La combinaison des modèles partiels par moyennage (expression (1)) peut alors être simplifiée comme indiqué ci-après.

Certaines méthodes de chiffrement homomorphe, telle que BGV permettent de réaliser une accumulation des clairs constitutifs du clair composite, comme décrit dans l'article original de Z. Brakerski et al. intitulé « Fully homomorphic encryption without bootstrapping » publié dans Cryptology ePrint Archive, Report 2011/277 . Plus précisément, on peut obtenir un second chiffré $\tilde{\alpha}$ à partir du chiffré $\overline{\alpha}$ dont le déchiffrement donne :

[Math. 13]

$$Dec\left(\tilde{\alpha}; HE.sk\right) = \left(\sum_{n=1}^{N} \alpha_n, ..., \sum_{n=1}^{N} \alpha_n\right) \tag{10}$$

Autrement dit, après déchiffrement, on obtient un second composite dont les éléments constitutifs sont tous égaux à la somme des clairs constituant le composite de départ.

Le calcul de l'expression (1) peut être effectué grâce à $L$ opérations de moyennage sur les $N$ fournisseurs de données, chaque opération de moyennage portant sur un seul paramètre du modèle.

A partir de la propriété (7), pour chaque $\ell = 1,..,L$, on détermine d'abord, à partir de $\overline{w}^t(\ell)$ un chiffré, $\overline{\overline{w}}_n^t(\ell)$

donnant par déchiffrement au moyen de *HE.sk* $\left( \dfrac{\sigma_n}{N} w_1^t(\ell), ..., \dfrac{\sigma_n}{N} w_N^t(\ell) \right)$, et l'on calcule un second chiffré $\tilde{w}^{t+1}(\ell)$ en

utilisant la propriété (10). Le résultat du calcul selon l'expression (1) est alors représenté par les valeurs chiffrées en homomorphe, $\tilde{w}^{t+1}(\ell)$, $\ell = 1,..,L$. Ces valeurs chiffrées sont transmises aux fournisseurs de données sélectionnés (et à la dernière itération à tous les fournisseurs de données ainsi qu'au(x) destinataire(s) additionnel(s)). Le déchiffrement de chaque valeur chiffrée $\tilde{w}^{t+1}(\ell)$ au moyen *HE.sk* donne *N* moyennes identiques dont, bien entendu, un seule est extraite par le fournisseur de données.

## Revendications

1. Méthode d'apprentissage fédératif d'un modèle de réseau de neurones artificiels, le modèle étant **caractérisé par** des paramètres donnant les coefficients synaptiques dudit réseau, la méthode d'apprentissage mettant en œuvre une pluralité *N* de fournisseurs de données ($DS1,...,DS_N$) disposant chacun d'un ensemble de données d'apprentissage distinct ($S_1,...S_N$) ainsi qu'une plateforme d'agrégation (*FP*), ladite méthode débutant par une étape d'initialisation (410) pour initialiser les paramètres du modèle, et se poursuivant par une pluralité d'itérations successives, chaque itération mettant à jour les paramètres d'un modèle courant du réseau de neurones, **caractérisée en ce que** :

   - à l'étape d'initialisation, les fournisseurs de données partagent la clé privée et la clé publique d'un cryptosystème homomorphe (*HE.sk, HE.pk*), chaque fournisseur de données générant (415) également une clé secrète de chiffrement par flot, $K^n_{sym}$, et transmettant à la plateforme d'agrégation ladite clé secrète, chiffrée au moyen de la clé publique du cryptosystème homomorphe, Enc($K^n_{sym}$,HE.pk) ; et qu'à chaque itération *t*,
   - la plateforme d'agrégation sélectionne (430) une sous-pluralité $M \leq N$ de fournisseurs de données et transmet aux *M* fournisseurs de données ainsi sélectionnés, les paramètres du modèle courant, chiffrés en homomorphe, *Enc($w^t$,HE.pk)* ;
   - chaque fournisseur de données sélectionné déchiffre les paramètres ainsi chiffrés au moyen de la clé privée du cryptosystème homomorphe (425), entraine le modèle courant sur son ensemble de données d'apprentissage (435) pour obtenir un modèle partiel ;
   - chaque fournisseur de données sélectionné, $DS_n$, chiffre (445) les paramètres du modèle partiel au moyen de sa clé secrète, $K^n_{sym}$, et transmet les paramètres du modèle partiel ainsi chiffrés, Enc($w^t_n$, $K^n_{sym}$), à la plateforme d'agrégation ;
   - la plateforme d'agrégation effectue un transchiffrement (447) des paramètres des modèles partiels des différents fournisseurs de données sélectionnés, pour obtenir ces mêmes paramètres chiffrés dans le domaine homomorphe.
   - la plateforme d'agrégation effectue (450), dans le domaine homomorphe, une combinaison des paramètres des modèles partiels obtenus par les différents fournisseurs de données, en effectuant un moyennage en parallèle des différents paramètres des modèles partiels, au moyen d'un traitement par lots sur un chiffré homomorphe représentant un composite des différents paramètres des modèles partiels, pour obtenir (460) les paramètres d'un nouveau modèle courant, chiffrés dans le domaine homomorphe ;

   et, lorsqu'un critère d'arrêt est satisfait (470), chaque fournisseur de données déchiffre (455), au moyen de la clé privée du cryptosystème homomorphe, les paramètres du dernier modèle courant pour obtenir un modèle final, entrainé sur la réunion desdits ensembles de données d'apprentissage.

2. Méthode d'apprentissage fédératif d'un modèle de réseau de neurones artificiels selon la revendication 1 **caractérisée en ce que** les clés secrètes des différents fournisseurs de données sont identiques, la clé secrète commune ayant été partagée entre les différents fournisseurs de données au moyen d'un protocole d'échange de clés multipartite.

## Patentansprüche

1. Föderatives Lernverfahren eines künstlichen neuronalen Netzwerkmodells, wobei das Modell durch Parameter gekennzeichnet ist, die die synaptischen Koeffizienten des Netzwerks ergeben, wobei das Lernverfahren eine Vielzahl von N Datenanbietern ($DS_1$,...,$DS_N$) implementiert, die jeweils über einen separaten Lerndatensatz ($S_1$,..., $S_N$) sowie eine Aggregationsplattform (*FP*) verfügen, wobei das Verfahren mit einem Initialisierungsschritt (410) zum Initialisieren der Parameter des Modells beginnt und durch eine Vielzahl von aufeinanderfolgenden Iterationen fortgesetzt wird, wobei jede Iteration die Parameter eines aktuellen Modells des neuronalen Netzwerks aktualisiert, **dadurch gekennzeichnet, dass**:

- in dem Initialisierungsschritt die Datenanbieter den privaten Schlüssel und den öffentlichen Schlüssel eines homomorphen Kryptosystems (*HE.sk, HE.pk*) teilen, wobei jeder Datenanbieter ebenfalls einen geheimen Float-Verschlüsselungsschlüssel, $K^n_{sym}$, generiert (415) und den geheimen Schlüssel, der mit dem öffentlichen Schlüssel des homomorphen Kryptosystems verschlüsselt ist, $Enc(K^n_{sym}, HE.pk)$, an die Aggregationsplattform übermittelt;

und dass bei jeder Iteration *t*,

- die Aggregationsplattform eine Untervielzahl $M \leq N$ von Datenanbietern auswählt (430) und den so ausgewählten Datenanbietern die Parameter des aktuellen Modells, verschlüsselt in homomorpher Form, $Enc(w^t, HE.pk)$, übermittelt;

- jeder ausgewählte Datenanbieter die so verschlüsselten Parameter mittels des privaten Schlüssels des homomorphen Kryptosystems (425) entschlüsselt und das aktuelle Modell auf seinem Lerndatensatz (435) trainiert, um ein Teilmodell zu erhalten;

- jeder ausgewählte Datenanbieter, $DS_n$, die Parameter des Teilmodells mit seinem geheimen Schlüssel, $K^n_{sym}$, verschlüsselt (445) und die so verschlüsselten Parameter des Teilmodells, $Enc(w^t_n, K^n_{sym})$, an die Aggregationsplattform übermittelt;

- die Aggregationsplattform eine Umverschlüsselung (447) der Parameter der Teilmodelle der verschiedenen ausgewählten Datenanbieter durchführt, um dieselben im homomorphen Bereich verschlüsselten Parameter zu erhalten.

- die Aggregationsplattform im homomorphen Bereich eine Kombination der von den verschiedenen Datenanbietern erhaltenen Parameter der Teilmodelle durchführt (450), indem sie parallel eine Mittelung der verschiedenen Parameter der Teilmodelle durchführt, mittels einer Batch-Verarbeitung auf einer homomorphen Zahl, die eine Kombination der verschiedenen Parameter der Teilmodelle darstellt, um die Parameter eines neuen gängigen Modells zu erhalten (460), die im homomorphen Bereich verschlüsselt sind;

und, wenn ein Abschaltkriterium erfüllt (470) ist, jeder Datenanbieter mittels des privaten Schlüssels des homomorphen Kryptosystems die Parameter des letzten aktuellen Modells entschlüsselt (455), um ein finales Modell zu erhalten, das auf der Zusammenführung der Lerndatensätze trainiert wurde.

2. Föderatives Lernverfahren eines künstlichen neuronalen Netzwerkmodells nach Anspruch 1, **dadurch gekennzeichnet, dass** die geheimen Schlüssel der verschiedenen Datenanbieter identisch sind, wobei der gemeinsame geheime Schlüssel zwischen den verschiedenen Datenanbietern mittels eines Mehrparteien-Schlüsselaustauschprotokolls geteilt wurde.

## Claims

1. A federated learning method for an artificial neural network model, the model being **characterised by** parameters giving the synaptic coefficients of said network, the learning method implementing a plurality *N* of data providers ($DS_1$,...,$DS_N$) each having a separate set of learning data ($S_1$,...,$S_N$) as well as a clustering platform (*FP*), said method starting with an initialisation step (410) to initialise the parameters of the model, and continuing with a plurality of successive iterations, each iteration updating the parameters of a current model of the neural network, **characterised in that**:

- in the initialisation step, the data providers share the private key and the public key of a homomorphic cryptosystem (HE.sk, *HE.pk)*, each data provider also generating (415) a stream encryption secret key, $K^n_{sym}$, and transmitting to the clustering platform said secret key, encrypted by means of the public key of the homomorphic cryptosystem, $Enc(K^n_{sym}, HE.pk)$;

and **in that** at each iteration *t*,

- the clustering platform selects (430) a sub-plurality $M \leq N$ of data providers and transmits to the *M* data providers thus selected, the parameters of the current model, homomorphically encrypted, $Enc(w^t, HE.pk)$;

- each data provider selected decrypts the parameters thus encrypted by means of the private key of the homomorphic cryptosystem (425), trains the current model on its learning data set (435) to obtain a partial model;

- each data provider selected, $DS_n$, encrypts (445) the parameters of the partial model by means of its secret key, $K^n_{sym}$, and transmits the parameters of the partial model thus encrypted, $Enc(w^t_n, K^n_{sym})$, to the clustering platform;

- the clustering platform performs transcryption (447) of the parameters of the partial models of the different data providers selected, to obtain these same parameters encrypted in the homomorphic domain.

- the clustering platform performs (450), in the homomorphic domain, a combination of the parameters of the partial models obtained by the different data providers, by performing parallel averaging of the different parameters of the partial models, by means of batch processing on a homomorphic encrypt representing a composite of the different parameters of the partial models, to obtain (460) the parameters of a new current model, encrypted in the homomorphic domain;

and, when a stop criterion is met (470), each data provider decrypts (455), by means of the private key of the homomorphic cryptosystem, the parameters of the last current model to obtain a final model, trained on the union of said learning data sets.

2. The federated learning method for an artificial neural network model according to claim 1, **characterised in that** the secret keys of the different data providers are identical, the common secret key having been shared between the different data providers by means of a multipartite key exchange protocol.

[Fig. 1]

**Fig. 1**

[Fig. 2]

**Fig. 2**

[Fig. 3]

310 ⟋

315 ⟋

| initialisation des paramètres du modèle du NN | ← $HE.pk$ | génération $(HE.pk, HE.sk)$ |

chiffrement des paramètres du modèle initial ⟍320

sélection de M fournisseurs de données parmi N ⟍330

325

transmission des paramètres chiffrés du modèle courant → $Enc(w^t, HE.pk)$ → déchiffrement avec $HE.sk$

⟍340

335

apprentissage local sur $S_n$

345

350 ⟋

combinaison des modèles partiels dans le domaine homomorphe ← $Enc(w_n^t, HE.pk)$ ← chiffrement des paramètres du modèle partiel

mise à jour des paramètres chiffrés du modèle ⟍360

355

critère d'arrêt satisfait? ⟋370

N          Y → $Enc(w^T, HE.pk)$ → déchiffrement des paramètres du modèle final

**Fig. 3**

16

[Fig. 4]

**Fig. 4**

## RÉFÉRENCES CITÉES DANS LA DESCRIPTION

**Documents brevets cités dans la description**

- FR 3060165 A

**Littérature non-brevet citée dans la description**

- **H.B. MCMAHAN et al.** Communication-efficient learning of deep networks from decentralized data. *Proc. of the 20th International Conference on Artificial Intelligence and Statistics (AISTATS)*, 2017, vol. 54
- **LIU CHANGCHANG** ; **CHAKRABORTY SUPRIYO** ; **VERMA DINESH**. *Secure Model Fusion for Distributed Learning Using Partial Homomorphic Encryption*, 2019
- Batch fully homomorphic encryption of the integers. **J-S. CORON et al.** Advances in Cryptology - EUROCRYPT 2013, Lecture Notes in Computer Science. Springer, vol. 7881
- **Z. BRAKERSKI et al.** Fully homomorphic encryption without bootstrapping. *Cryptology ePrint Archive, Report 2011/277*